(19) Europäisches Patentamt
European Patent Office
Office européen des brevets

(11) EP 4 114 872 B1

(12) # EUROPEAN PATENT SPECIFICATION

(45) Date of publication and mention of the grant of the patent:
**03.09.2025 Bulletin 2025/36**

(21) Application number: **21706299.1**

(22) Date of filing: **23.02.2021**

(51) International Patent Classification (IPC):
***B29C 45/00*** *(2006.01)* ***C08F 210/06*** *(2006.01)*
*B29K 23/00* *(2006.01)* *B29L 31/00* *(2006.01)*

(52) Cooperative Patent Classification (CPC):
(C-Sets available)
**B29C 45/0001;** B29K 2023/14; B29L 2031/712;
C08F 210/06 (Cont.)

(86) International application number:
**PCT/EP2021/054392**

(87) International publication number:
**WO 2021/175649 (10.09.2021 Gazette 2021/36)**

(54) **PROPYLENE BASED COPOLYMER FOR CONTAINERS**

PROPYLENBASIERTES COPOLYMER FÜR BEHÄLTER

COPOLYMÈRE À BASE DE PROPYLÈNE POUR RÉCIPIENTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.03.2020 EP 20160948**

(43) Date of publication of application:
**11.01.2023 Bulletin 2023/02**

(73) Proprietor: **Basell Poliolefine Italia S.r.l.**
**20121 Milano (IT)**

(72) Inventors:
- **FERRARO, Gianpiero**
  **44122 Ferrara (IT)**
- **CIARAFONI, Marco**
  **44122 Ferrara (IT)**
- **CAVALIERI, Claudio**
  **44122 Ferrara (IT)**
- **CATHELIN, Caroline**
  **44122 Ferrara (IT)**
- **PRINI, Giansiro**
  **44122 Ferrara (IT)**

(74) Representative: **LyondellBasell**
**c/o Basell Poliolefine Italia**
**Intellectual Property**
**P.le Donegani 12**
**44122 Ferrara (IT)**

(56) References cited:
**EP-A1- 0 812 371** **EP-A1- 3 567 061**
**WO-A1-2009/077328** **WO-A1-2016/087185**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 210/06, C08F 2/001;**
**C08F 210/06, C08F 4/6465;**
C08F 210/06, C08F 210/14, C08F 2500/12,
C08F 2500/27, C08F 2500/30, C08F 2500/31,
C08F 2500/35, C08F 2500/33, C08F 2500/34

## Description

### FIELD OF THE INVENTION

The present disclosure relates to propylene copolymers for the preparation of injection molded containers, particularly thin wall injection molded containers, having a good balance of mechanical which can be produced with high efficiency injection molding process. Said containers comprise a propylene/1-hexene copolymer having particular properties.

### BACKGROUND OF THE INVENTION

Manufacture of containers via injection molding process is known in the art. A complete cycle of the manufacturing process takes place in four steps.

The first one is the filling step where the mold is filled with the molten polymer at a certain velocity (flow rate) controlled by the machine.

In the second step (Packing step) pressure is applied to the polymer melt to compress the polymer and to force more material into the mold.

The third step relates to the cooling of the molding. In this step, there is no more pressure being applied to the polymer. The mold is held shut and the polymer continues to cool until the part can be ejected. The cooling stage is normally the longest part of the molding cycle and can account for up to 80 percent of the total cycle time.

In the last step the mold is open, the part is ejected and the preparation is started for the next cycle.

As the cooling step is by far the longest step of the cycle, any attempt to shorten the whole cycle time, and therefore to increase productivity, would be more effective if applied to the cooling time. In fact, the mold can be open and the part ejected when the polymer within the mold has solidified and crystallized. Accordingly, polymers having higher crystallization temperatures (Tc) require less time to reach said Tc from the melted state. In principle, propylene homopolymers are polymers with high Tc but their optical and impact resistance properties are not totally satisfactory.

Polypropylene modified with comonomers and in particular propylene/1-hexene copolymers have been proposed as materials to be used in the preparation of injection molded articles. WO2009/077328 relates to transparent molded articles manufactured from a copolymer of propylene and hexene-1 in which the content 1-hexene derived units ranges from 1.5 wt% to 6 wt%, the MFR ranges from 15 to 45 g/10 min. and the xylene soluble fraction ranges from 1 to 4% wt with respect to the total weight of the copolymer. Although the mechanical and optical properties are interesting, the Tc of the said terpolymer is too low. Other propylene/1-hexene copolymers are known from EP 3 567 061 A1, EP 0 812 371 A1, WO 2016/087185 A1 or US 2014/0134911 A1.

The applicant has surprisingly found that with a specific combination of features it is possible to obtain propylene/1-hexene copolymer having a higher Tc. These copolymers when used in injection molding process produce containers, in particular thin wall containers with shorter cycle time.

### SUMMARY OF THE INVENTION

It is therefore an object of the present disclosure a propylene/ 1-hexene copolymer in which:

i) the content of 1-hexene derived units, measured by $C^{13}$-NMR, ranges from 1.5 wt% to 2.5 wt% preferably from 1.7 to 2.3%wt and the content of propylene derived units ranges from 97.5 to 98.5 wt. %, preferably from 97.7 to 98.3%wt ;

ii) melting temperature measured by DSC in the range 148-153°C preferably from 149 to 152°C;

iii) the amount of fraction insoluble in xylene at 25°C is higher than 97.0% preferably higher than 97.4% more preferably in the range 97.5-98.5%wt;

iv) has a melt flow rate (MFR) measured according to ISO 1133, 230°C, 2.16 kg ranging from 35 to 65 g/10 min; preferably from 37 to 55 g/10 min; more preferably from 40 to 50 g/10 min.

### DETAILED DESCRIPTION OF THE INVENTION

The features i) to iv) are not inextricably linked to each other. This means that a certain level of preference of one the features i) to iv) should not necessarily involve the same level of preference of the remaining features. This is also the case if one additional feature is combined with features i) to iv).

The copolymer contains only propylene and 1-hexene, the sum of these two comonomers derived units content being 100 wt%.

It is apparent to the skilled in the art that the MFR of feature (iv) can be obtained directly from polymerization possibly in the presence of molecular weight regulator (i.e., hydrogen) or by chemical degradation (via peroxide) of a copolymer having a lower MFR.

The copolymers have a stereoregularity of isotactic type of the propylenic sequences and as a consequence also high crystallinity. This is confirmed by the low value of xylene extractables.

Preferably, the copolymers of the present disclosure are characterized by a molecular weight distribution, expressed as Polydispersity Index, of lower than 5 preferably lower than 4.5 and more preferably in the range 4.3 to 3.3.

The copolymers of the present disclosure may be further endowed with a low level of hexane extractable that renders them particularly suitable for the preparation of food containers. The hexane extractables measured according to FDA 21 77:1520 is lower than 2.2 wt%; preferably lower than 2.1 wt%; more preferably equal to or lower than 2.0 wt%.

It has also been observed that the said copolymers may show a crystallization temperature (Tc) of higher than 119°C, preferably higher than 120°C and more preferably in the range 120-124°C.

Preferably, the difference between the melting temperature Tm and the crystallization temperature Tc is less than 30°C.

The copolymer of the disclosure may further be characterized by a Flexural Modulus (according to ISO 178) in the range 800-1200 $N/m^2$ and by an impact resistance (Charpy) at 23°C ranging from 1 to 5 $KJ/m^2$ and at 0°C ranging from 0.8 to 3 $KJ/m^2$.

It is a further object of the present disclosure an injection molded container made of the propylene copolymer previously described. Preferably, the container is a thin wall injection molded container. With the term thin wall is intended a thickness of the walls lower than 0.7mm and a length/thickness ratio over 150.

The container can be endowed with a low value of haze. The haze, measured on 0.4 mm wall of the container, is lower than 4.0% preferably lower than 3.5 %; more preferably lower than 3.0 %.

Also, said containers preferably show high values of impact properties. In a container having 0.4 mm wall thick the container impact test at 23°C shows values higher than 2.0 J; preferably higher than 3.0 J even more preferably higher than 3.2 J. Furthermore, the containers preferably show good values of top load. The top load of a container having 0.4 mm wall thick is higher than 230 N; preferably higher than 250 N.

The injection molded container and the TWIM container can be obtained with injection molding apparatus and conditions disclosed and employed in the art. The use of the copolymers of the present disclosure ensures a short cycle time and therefore an enhanced productivity. In particular, the use of the copolymer of the present disclosure in the TWIM process is able to reduce of about 30% the cycle time with respect to the use of a commercial propylene/ethylene copolymer for the same application.

The copolymer for the injection molded container of the present disclosure can be prepared by polymerisation in one or more polymerisation steps. Such polymerisation can be carried out in the presence of Ziegler-Natta catalysts. The catalysts comprise a solid catalyst component comprising a titanium compound having at least one titanium-halogen bond, and an electron-donor compound, both supported on a magnesium halide in active form. They also comprise a co-catalyst, which is an organoaluminium compound, such as an aluminium alkyl compound and preferably also an external electron donor is added.

The solid catalyst components used in said catalysts preferably comprise, as electron-donors (internal donors), compounds selected from the group consisting of ethers and esters of mono and dicarboxylic acids.

Particularly preferred electron-donor compounds are esters of succinic, glutaric and phthalic acid and 1,3-diethers of formula (I) :

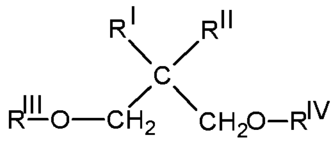

wherein $R^I$ and $R^{II}$ are the same or different and are $C_1$-$C_{18}$ alkyl, $C_3$-$C_{18}$ cycloalkyl or $C_7$-$C_{18}$ aryl radicals; $R^{III}$ and $R^{IV}$ are the same or different and are $C_1$-$C_4$ alkyl radicals; or are the 1,3-diethers in which the carbon atom in position 2 belongs to a cyclic or polycyclic structure made up of 5, 6, or 7 carbon atoms, or of 5-n or 6-n' carbon atoms, and respectively n nitrogen atoms and n' heteroatoms selected from the group consisting of N, O, S and Si, where n is 1 or 2 and n' is 1, 2, or 3, said structure containing two or three unsaturations (cyclopolyenic structure), and optionally being condensed with other cyclic structures, or substituted with one or more substituents selected from the group consisting of linear or branched alkyl radicals; cycloalkyl, aryl, aralkyl, alkaryl radicals and halogens, or being condensed with other cyclic structures and substituted with one or more of the above mentioned substituents that can also be bonded to the condensed cyclic structures; one or more of the above mentioned alkyl, cycloalkyl, aryl, aralkyl, or alkaryl radicals and the condensed cyclic structures optionally containing one or more heteroatom(s) as substitutes for carbon or hydrogen atoms, or both.

Ethers of this type are described in published European patent applications 361493 and 728769.

Representative examples of said diethers are 2-methyl-2-isopropyl-1,3-dimethoxypropane, 2,2-diisobutyl-1,3-dimethoxypropane, 2-isopropyl-2-cyclopentyl-1,3-dimethoxypropane, 2-isopropyl-2-isoamyl-1,3-dimethoxypropane,

9,9-bis (methoxymethyl) fluorene.

Other preferred electron-donor compounds are phthalic acid esters, such as diisobutyl, dioctyl, diphenyl and benzylbutyl phthalate.

According to a particularly preferred embodiment, a mixture of at least two electron donor compounds one of which being present in an amount from 30 to 90% by mol with respect to the total amount of donors and selected from succinates or glutarates and the other being selected from 1,3 diethers is used.

The preparation of the above mentioned catalyst component can be carried out according to various methods.

In a preferred one, a $MgCl_2 \cdot nROH$ adduct (in particular in the form of spheroidal particles) wherein n is generally from 1 to 3 and ROH is ethanol, butanol or isobutanol, is reacted with an excess of $TiCl_4$ containing the electron-donor compound. The reaction temperature is generally from 80 to 120° C. The solid is then isolated and reacted once more with $TiCl_4$, after which it is separated and washed with aliquots of a hydrocarbon until chlorine ions have disappeared.

In the solid catalyst component the titanium compound, expressed as Ti, is generally present in an amount from 0.5 to 10% by weight. The quantity of total electron-donor compound which remains fixed on the solid catalyst component generally is 5 to 20% by moles with respect to the magnesium dihalide.

The titanium compounds, which can be used for the preparation of the solid catalyst component, are the halides and the halogen alcoholates of titanium. Titanium tetrachloride is the preferred compound.

The Al-alkyl compounds used as co-catalysts comprise the Al-trialkyls, such as Al-triethyl, Al-triisobutyl, Al-tri-n-butyl.

The Al-alkyl compound is generally used in such a quantity that the Al/Ti ratio be from 1 to 1000.

The electron-donor compounds that can be used as external donors include aromatic acid esters such as alkyl benzoates, and in particular silicon compounds containing at least one Si-OR bond, where R is a hydrocarbon radical.

Examples of silicon compounds are $(tert\text{-}butyl)_2Si(OCH_3)_2$, (cyclohexyl)(methyl)Si $(OCH_3)_2$, $(cyclopentyl)_2Si(OCH_3)_2$ and $(phenyl)_2Si(OCH_3)_2$ and (1,1,2-trimethylpropyl)$Si(OCH_3)_3$.

In particular, even if many other combinations of the previously said catalyst components may allow to obtain propylene polymer compositions according to the present disclosure, the terpolymers are preferably prepared by using catalysts containing a mixture of succinate and 1,3-diether as internal donor and $(cyclopentyl)_2Si(OCH_3)_2$ as outside donor.

The said propylene/hexene-1 polymers are produced with a polymerization process illustrated in EP application 1 012 195.

In detail, the said process comprises feeding the monomers to said polymerisation zones in the presence of catalyst under reaction conditions and collecting the polymer product from the said polymerisation zones. In the said process the growing polymer particles flow upward through one (first) of the said polymerisation zones (riser) under fast fluidisation conditions, leave the said riser and enter another (second) polymerisation zone (downcomer) through which they flow downward in a densified form under the action of gravity, leave the said downcomer and are reintroduced into the riser, thus establishing a circulation of polymer between the riser and the downcomer.

In the downcomer high values of density of the solid are reached, which approach the bulk density of the polymer. A positive gain in pressure can thus be obtained along the direction of flow, so that it become to possible to reintroduce the polymer into the riser. In this way, a "loop" circulation is set up, which is defined by the balance of pressures between the two polymerisation zones and by the head loss introduced into the system.

Generally, the condition of fast fluidization in the riser is established by feeding a gas mixture comprising the relevant monomers to the said riser. It is preferable that the feeding of the gas mixture is effected below the point of reintroduction of the polymer into the said riser by the use, where appropriate, of gas distributor means. The velocity of transport gas into the riser is higher than the transport velocity under the operating conditions, preferably from 2 to 15 m/s.

Generally, the polymer and the gaseous mixture leaving the riser are conveyed to a solid/gas separation zone. The solid/gas separation can be effected by using conventional separation means. From the separation zone, the polymer enters the downcomer. The gaseous mixture leaving the separation zone is compressed, cooled and transferred, if appropriate with the addition of make-up monomers and/or molecular weight regulators, to the riser. The transfer can be effected by means of a recycle line for the gaseous mixture.

The control of the polymer circulating between the two polymerisation zones can be effected by metering the amount of polymer leaving the downcomer using means suitable for controlling the flow of solids, such as mechanical valves.

The operating parameters, such as the temperature, are those that are usual in olefin polymerisation process, for example between 50 to 120° C.

This first stage process can be carried out under operating pressures of between 0.5 and 10 MPa, preferably between 1.5 to 6 MPa.

During polymerization, one or more inert gases are maintained in the polymerisation zones, in such quantities that the sum of the partial pressure of the inert gases is preferably between 5 and 80% of the total pressure of the gases. The inert gas can be nitrogen or propane, for example.

The various catalysts are fed up to the riser at any point of the said riser. However, they can also be fed at any point of the downcomer. The catalyst can be in any physical state, therefore catalysts in either solid or liquid state can be used.

Conventional additives, fillers and pigments, may be added, such as nucleating agents, extension oils, mineral fillers, and other organic and inorganic pigments. In particular, the addition of inorganic fillers, such as talc, calcium carbonate and mineral fillers, also brings about an improvement to some mechanical properties, such as flexural modulus and HDT. Talc can also have a nucleating effect.

The nucleating agents are added to the compositions of the present disclosure in quantities ranging from 0.05 to 2% by weight, more preferably from 0.1 to 1% by weight, with respect to the total weight.

The container, object of the present disclosure can have various shapes, such as cubic, conic, or irregular shapes.

The particulars are given in the following examples, which are given to illustrate, without limiting, the present disclosure.

EXAMPLES

CHARACTERIZATION METHODS

Melting temperature and crystallization temperature:

Determined by differential scanning calorimetry (DSC). weighting 6 ±1 mg, is heated to 220 ±1 ° C at a rate of 20 °C/min and kept at 220 ±1 ° C for 2 minutes in nitrogen stream and it is thereafter cooled at a rate of 20° C/min to 40 ±2° C, thereby kept at this temperature for 2 min to crystallise the sample. Then, the sample is again fused at a temperature rise rate of 20° C/min up to 220° C ±1. The melting scan is recorded, a thermogram is obtained, and, from this, melting temperatures and crystallization temperatures are read.

Melt Flow Rate

Determined according to the method ISO 1133 (230° C, 5 kg).

Solubility in xylene:

2.5 g of polymer and 250 ml of xylene are introduced in a glass flask equipped with a refrigerator and a magnetical stirrer. The temperature is raised in 30 minutes up to the boiling point of the solvent. The so obtained clear solution is then kept under reflux and stirring for further 30 minutes. The closed flask is then kept for 30 minutes in a bath of ice and water and in thermostatic water bath at 25° C for 30 minutes as well. The so formed solid is filtered on quick filtering paper. 100 ml of the filtered liquid is poured in a previously weighed aluminium container, which is heated on a heating plate under nitrogen flow, to remove the solvent by evaporation. The container is then kept on an oven at 80° C under vacuum until constant weight is obtained. The weight percentage of polymer soluble in xylene at room temperature is then calculated.

1-hexene content:

Determined by $^{13}C$-NMR spectroscopy in terpolymers:

NMR analysis. $^{13}C$ NMR spectra are acquired on an AV-600 spectrometer operating at 150.91 MHz in the Fourier transform mode at 120 °C. The peak of the propylene CH was used as internal **reference** at 28.83. The $^{13}C$ NMR spectrum is acquired using the following parameters:

| | |
|---|---|
| Spectral width (SW) | 60 ppm |
| Spectrum centre (O1) | 30 ppm |
| Decoupling sequence | WALTZ 65_64pl |
| Pulse program $^{(1)}$ | ZGPG |
| Pulse Length (P1) $^{(2)\backslash}$ | for 90° |
| Total number of points (TD) | 32K |
| Relaxation Delay $^{(2)}$ | 15 s |
| Number of transients $^{(3)}$ | 1500 |

The total amount of 1-hexene and ethylene as molar percent is calculated from diad using the following relations:

$$[P] = PP + 0.5PH$$

$$[H] = HH + 0.5PH$$

Haze (on 1 mm plaque):

According to the method used, 5x5 cm specimens are cut molded plaques of 1 mm thick and the haze value is measured using a a Gardner photometer with Haze-meter UX-10 equipped with a G.E. 1209 lamp and filter C. The instrument calibration is made by carrying out a measurement in the absence of the sample (0% Haze) and a measurement with intercepted light beam (100% Haze).
The measurement and computation principle are given in the norm ASTM-D1003.
The plaques to be tested are produced according to the following method. 75x75x2 mm plaques are molded with a GBF Plastiniector G235/90 Injection Molding Machine, 90 tons under the following processing conditions:

| | |
|---|---|
| Screw rotation speed: | 120 rpm |
| Back pressure: | 10 bar |
| Melt temperature: | 260°C |
| Injection time: | 5 sec |
| Switch to hold pressure: | 50 bar |
| First stage hold pressure: | 30 bar |
| Second stage pressure: | 20 bar |
| Hold pressure profile: | First stage 5 sec |
| | Second stage 10 sec |
| Cooling time: | 20 sec |
| Mold water temperature: | 40°C |

The plaques are conditioned for 12 to 48 hours at relative humidity of 50% and temperature of 23° C.

Haze on container:

The haze on container have been measured by cutting a 5x5 cm specimens from the container wall and using the same above procedure for the haze (on 2 mm plaque).

Top Load:

After at least 70 -hours conditioning at 23°C and 50% relative humidity, the bottle is settled between the two plates of the dynamometer and compressed with a stress velocity of the plate of 10mm/min.
The stress at collapse of the container is recorded and the value reported in N. The Top Load value is the mean value obtained from measurements repeated on 6 injection molded containers.

Container impact test (CIT)

The test is a biaxial impact test, the container, bottom up, was put on a sample older, having the same dimension of the container
The plate for the impact has a diameter of 62 mm and 5 kg of weight, it falls from 600 mm. The results are expressed in Joule. The results are an average of 10 tests.
Containers to be tested are produced with an injection molding machine with the following specs:
Injection molding unit parameters:

Injection screw stroke: 1200 kN
Screw diameter: 32 mm
Injected volume: 102.9 cm3
Screw ratio L/D: 20
Max injection press: 2151 bar

The items to be tested must have the listed characteristics

Volume: 250 cc
Surface treatment: Polished

The shape of the container is a truncated pyramid with a square base, wherein the top base has a side of 70 mm and the bottom base has a side of 50 mm, the height being 80 mm

IZOD Impact Strength:

Determined according to IS0 180/1A. Samples have been obtained according to ISO 294-2.
The hexane extractables:
measured according to FDA 21 77:1520

Example 1

Copolymer is prepared by polymerising propylene and hexene-1 in the presence of a catalyst under continuous conditions in a plant comprising a polymerisation apparatus as described in EP 1 012 195.
The catalyst is sent to the polymerisation apparatus that comprises two interconnected cylindrical reactors, riser and downcomer. Fast fluidisation conditions are established in the riser by recycling gas from the gas-solid separator. In examples 1-2 no barrier feed has been used.
The catalyst employed comprises a catalyst component prepared as described in Example 5 of WO2012/139897. Such catalyst component is used with dicyclopentyl dimethoxy silane (DCPMS) as external donor and with triethylaluminium (TEA).
The polymer particles exiting the reactor are subjected to a steam treatment to remove the reactive monomers and volatile substances and then dried. The main operative conditions and characteristics of the produced polymers are indicated in Table 1.

Table 1 - Polymerization Process

| Example | | Ex. 1 |
|---|---|---|
| | | |
| TEAL/external donor | wt/wt | 4 |
| TEAL/catalyst | wt/wt | 6 |
| Temperature | °C | 78 |
| Pressure | bar-g | 26 |
| $H_2/C_3^-$ riser | mol/mol | 0,032 |
| $C_6^-/(C_6^-+C_3^-)$ | mol/mol | 0,022 |
| $C_3^-$ = propylene $C_6^-$ = 1-hexene | | |

The polymer particles are introduced in an extruder, wherein they are mixed with 500 ppm of Irganox 1010 and 1000 ppm of Irgafos 168 and 500 ppm of Ca stearate, 1000 ppm of GMS 90 and 0.4 % of NX800. The polymer particles are extruded under nitrogen atmosphere in a twin screw extruder, at a rotation speed of 250 rpm and a melt temperature of 200-250° C.
Properties of the obtained material have been reported in table 2.

Comparative example 1

It corresponds to Ex. 1 of WO2009/077328

Table 2

| | | Ex. 1 | Comp. Ex. 1 |
|---|---|---|---|
| 1.hexene content | Wt% | 2.2 | 2.9 |
| Xylene soluble | Wt% | 2.2 | 3.0 |
| Tm | °C | 151 | 146 |
| MFR | dl/g | 41 | 27 |
| Izod Impact @23°C | kJ/m$^2$ | 3.6 | 3.5 |

(continued)

| | | Ex. 1 | Comp. Ex. 1 |
|---|---|---|---|
| Tc | °C | 122 | 113.8 |
| PI | | 3.6 | 3.7 |
| Flexural modulus | MPa | 1200 | 1140 |
| Elongation @break | % | 690. | 430 |

The polymer of Ex. 1 has been used in the production of TWIM containers under the conditions previously described. The total cycle time was 4 seconds. For a comparison, a commercially available random propylene/ethylene copolymer for TWIM having a MFR of 40 g/10' and a Tc of 116°C was used as well in the preparation of TWIM containers. In this case, the total cycle time was 6 seconds.

**Claims**

1. A propylene/ 1-hexene copolymer in which:

   i) the content of 1-hexene derived units, measured by $C^{13}$-NMR, ranges from 1.5 wt% to 2.5 wt% and the content of propylene derived units ranges from 97.5 to 98.5 wt. %;
   ii) the melting temperature, measured by DSC according to the procedure set forth in the description, is in the range 148-153°C;
   iii) the amount of fraction insoluble in xylene at 25°C is higher than 97.0%;
   iv) the melt flow rate (MFR) measured according to ISO 1133, 230°C, 2.16 kg ranges from 35 to 65 g/10 min.

2. The propylene/1-hexene copolymer of claim 1 wherein the content of 1-hexene derived units ranges 1.7 wt% to 2.3wt%.

3. The propylene/1-hexene copolymer according to any of the preceding claims wherein the weight amount of fraction insoluble in xylene at 25°C is higher than 97.4% .

4. The propylene/1-hexene copolymer according to any of the preceding claims wherein the melting temperature measured by DSC ranges from 149 to 152°C.

5. The propylene/1-hexene copolymer according to any of claims 1-4 wherein the melt flow rate, MFR, measured according to ISO 1133, 230° C, 2.16 kg, ranges from 37 to 55 g/10 min.

6. The propylene/1-hexene copolymer according to any of the preceding claims wherein the Polydispersity Index, of lower than 5.

7. The propylene/1-hexene copolymer according to any of the preceding claims wherein the difference between the melting temperature Tm and the crystallization temperature Tc is less than 30°C.

8. A container made of a propylene/1-hexene copolymer according to one or more of claims 1-7.

9. The container according to claim 8 obtained by an injection molding process.

10. The container according to any of claims 8-10 which is obtained by a Thin Wall Injection Molding process.

**Patentansprüche**

1. Propylen/1-Hexen-Copolymer, worin:

   i) der Gehalt an von 1-Hexen abgeleiteten Einheiten, gemessen mittels $C^{13}$-NMR, im Bereich von 1,5 Gew.% bis 2,5 Gew.% liegt und der Gehalt an von Propylen abgeleiteten Einheiten im Bereich von 97,5 bis 98,5 Gew. % liegt;

ii) die Schmelztemperatur, gemessen mittels DSC gemäß der in den technischen Angaben beschriebenen Vorgehensweise, im Bereich von 148 bis 153 °C liegt;
iii) die Menge der bei 25 °C in Xylol unlöslichen Fraktion höher als 97,0 % ist;
iv) die Schmelzflussrate (MFR), gemessen gemäß ISO 1133, 230 °C, 2,16 kg, im Bereich von 35 bis 65 g/10 min liegt.

**2.** Propylen/1-Hexen-Copolymer nach Anspruch 1, wobei der Gehalt an von 1-Hexen abgeleiteten Einheiten im Bereich von 1,7 Gew.% bis 2,3 Gew.% liegt.

**3.** Propylen/1-Hexen-Copolymer nach einem der vorhergehenden Ansprüche, wobei die Gewichtsmenge der bei 25 °C in Xylol unlöslichen Fraktion höher als 97,4 % ist.

**4.** Propylen/1-Hexen-Copolymer nach einem der vorhergehenden Ansprüche, wobei die Schmelztemperatur, gemessen mittels DSC, im Bereich von 149 bis 152 °C liegt.

**5.** Propylen/1-Hexen-Copolymer nach einem der Ansprüche 1 bis 4, wobei die Schmelzflussrate, MFR, gemessen gemäß ISO 1133, 230 °C, 2,16 kg, im Bereich von 37 bis 55 g/10 min liegt.

**6.** Propylen/1-Hexen-Copolymer nach einem der vorhergehenden Ansprüche, wobei der Polydispersitätsindex kleiner als 5 ist.

**7.** Propylen/1-Hexen-Copolymer nach einem der vorhergehenden Ansprüche, wobei die Differenz zwischen der Schmelztemperatur Tm und der Kristallisationstemperatur Tc unter 30 °C liegt.

**8.** Behälter, der aus einem Propylen/1-Hexen-Copolymer gemäß einem oder mehreren der Ansprüche 1 bis 7 gefertigt ist.

**9.** Behälter nach Anspruch 8, der mittels eines Spritzgießprozesses erhalten wird.

**10.** Behälter nach einem der Ansprüche 8 bis 10, der mittels eines Dünnwand-Spritzgießprozesses erhalten wird.

## Revendications

**1.** Copolymère de propylène/1-hexène, dans lequel :

i) la teneur en motifs dérivés de 1-hexène, mesurée par $^{13}$C-RMN, est située dans la plage de 1,5 % en poids à 2,5 % en poids et la teneur en motifs dérivés du propylène est située dans la plage de 97,5 à 98,5 % en poids ;
ii) la température de fusion, mesurée par DSC selon la procédure décrite dans la description, est située dans la plage de 148 à 153 °C ;
iii) la quantité de fraction insoluble dans le xylène à 25 °C est supérieure à 97,0 % ;
iv) l'indice de fluidité à chaud (MFR), mesuré selon la norme ISO 1133, 230 °C, 2,16 kg, est situé dans la plage de 35 à 65 g/10 min.

**2.** Copolymère de propylène/1-hexène selon la revendication 1, la teneur en motifs dérivés de 1-hexène étant située dans la plage de 1,7 % en poids à 2,3 % en poids.

**3.** Copolymère de propylène/1-hexène selon l'une quelconque des revendications précédentes, la quantité en poids de fraction insoluble dans le xylène à 25 °C étant supérieure à 97,4 %.

**4.** Copolymère de propylène/1-hexène selon l'une quelconque des revendications précédentes, la température de fusion mesurée par DSC étant située dans la plage de 149 à 152 °C.

**5.** Copolymère de propylène/1-hexène selon l'une quelconque des revendications 1 à 4, l'indice de fluidité à chaud, MFR, mesuré selon la norme ISO 1133, 230 °C, 2,16 kg, étant situé dans la plage de 37 à 55 g/10 min.

**6.** Copolymère de propylène/1-hexène selon l'une quelconque des revendications précédentes, l'indice de polydispersité étant inférieur à 5.

7. Copolymère de propylène/1-hexène selon l'une quelconque des revendications précédentes, la différence entre la température de fusion Tm et la température de cristallisation Tc étant inférieure à 30 °C.

8. Récipient fabriqué en un copolymère de propylène/1-hexène selon l'une ou plusieurs des revendications 1 à 7.

9. Récipient selon la revendication 8 obtenu par un procédé de moulage par injection.

10. Récipient selon l'une quelconque des revendications 8 à 10 qui est obtenu par un procédé de moulage par injection à paroi mince.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2009077328 A
- EP 3567061 A1
- EP 0812371 A1
- WO 2016087185 A1
- US 20140134911 A1
- EP 361493 A
- EP 728769 A
- EP 1012195 A
- WO 2012139897 A